(19) Europäisches Patentamt
European Patent Office
Office européen des brevets

(11) **EP 2 774 493 B1**

(12) **EUROPEAN PATENT SPECIFICATION**

(45) Date of publication and mention
of the grant of the patent:
**28.06.2017 Bulletin 2017/26**

(21) Application number: **11874909.2**

(22) Date of filing: **04.11.2011**

(51) Int Cl.:
*A23L 27/60* *(2016.01)*    *A23L 35/00* *(2016.01)*

(86) International application number:
**PCT/JP2011/075477**

(87) International publication number:
**WO 2013/065184 (10.05.2013 Gazette 2013/19)**

(54) **ACIDIC OIL-IN-WATER EMULSIFIED FOOD**

SAURE NAHRUNGSMITTEL IN FORM EINER ÖL-IN-WASSER-EMULSION

ALIMENT À ÉMULSION D'HUILE DANS L'EAU ACIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.09.2014 Bulletin 2014/37**

(73) Proprietor: **Kewpie Corporation**
**Tokyo 150-0002 (JP)**

(72) Inventors:
  • **OTOTANI Ryohei**
    **Tokyo 1820002 (JP)**
  • **WAKAMI Shunsuke**
    **Tokyo 18200002 (JP)**
  • **HORII Naoto**
    **Tokyo 1820002 (JP)**
  • **YAMAHIRA Takashi**
    **Tokyo 1820002 (JP)**
  • **NAGASAWA Takeshi**
    **Tokyo 1820002 (JP)**
  • **ARIIZUMI Masahiro**
    **Tokyo 1820002 (JP)**
  • **YANAGISAWA Takuya**
    **Tokyo 1820002 (JP)**
  • **KUBO Megumi**
    **Tokyo 1820002 (JP)**
  • **HANDA Akihiro**
    **Tokyo 18200002 (JP)**

(74) Representative: **Winter, Brandl, Fürniss, Hübner, Röss, Kaiser, Polte - Partnerschaft mbB Patent- und Rechtsanwaltskanzlei Alois-Steinecker-Strasse 22 85354 Freising (DE)**

(56) References cited:
**EP-A1- 0 134 196    JP-A- S 615 761
JP-A- S5 823 764    JP-A- 2001 252 041
JP-B2- 3 565 882    US-A1- 2003 044 507**

**Description**

Technical Field

The present invention relates to an acidic oil-in-water emulsified food having excellent storage stability even under a severe storage condition such as a temporary frozen state and a high temperature state of about 40°C and excellent transportability and storageability in logistics.

Background Art

Typical examples of the acidic oil-in-water emulsified food include a mayonnaise and a semi-solid emulsified dressing.

The mayonnaise and the semi-solid emulsified dressing are obtained by emulsification of an edible oil and fat with an acid such as vinegar, and as a main material for an emulsifier, an egg yolk, a whole egg, or the like is used. A rich taste thereof due to oil droplets of emulsified oil is preferred. They are commercially available in a shape in which they are sealed in a container so as to be stored in a home and used as needed.

As a method for preventing the occurrence of a crack in a mayonnaise-like acidic oil-in-water emulsified food, in which an oil phase raw material is reduced, during storage at a low temperature of about 4°C, blending of an egg white and an egg yolk treated with phospholipase A (so-called lysed egg yolk) at a certain ratio to improve the storage stability has been proposed (Patent Literature 1).

In the mayonnaise-like acidic oil-in-water emulsified food of Patent Literature 1, the use of lysed egg yolk improves a crack prevention effect at low temperature. However, the crack prevention effect at a high temperature of about 40°C is insufficient, and a crack and oil separation may occur during storage under a temporary high temperature condition, for example, at a food warehouse in summer. Further, under a condition of temporary frozen state near a cooling air blowoff port of a refrigerator during cold storage, the emulsified food may crack. Therefore, further prevention of a crack and oil separation under a severe storage condition is desired.

Citation List

Patent Literature

Patent Literature 1: Japanese Patent Application Laid-Open No. 2001-252041

Summary of Invention

Technical Problem

An object of the present invention is to prevent the occurrence of a crack and oil separation in an acidic oil-in-water emulsified food such as a mayonnaise and a mayonnaise-like semi-solid emulsified dressing during storage under a severe storage condition such as a temporary frozen state and a high temperature state of about 40°C.

Solution to Problem

The present inventors have found that when an acidic oil-in-water emulsified food containing a denatured egg white, an emulsifier, and a thickener has a specific relationship between complex viscosity and temperature, a crack prevention effect can be obtained even at low temperature leading to a temporary frozen state or a high temperature of about 40°C. The inventors have also found that the relationship between the complex viscosity and the temperature significantly is affected by a denatured state of egg white.

The present invention provides an acidic oil-in-water emulsified food which contains 5 to 75% by mass of an edible oil and fat, 0.3 to 5% by mass of a denatured egg white in terms of solid content, an emulsifier, and a thickener, and has a viscosity (25°C) of 50 to 800 Pa·s, wherein a first change ratio of the logarithm of complex viscosity with respect to temperature (Thermo-Sensitivity 1: TS1) and a second change ratio of the logarithm of complex viscosity with respect to temperature (Thermo-Sensitivity 2: TS2), which are calculated from the following equations (1) and (2), respectively, are TS1 = - 8 to -2, and TS2 = 0 to 15, respectively,

$$TS1 = \{(\ln\eta^*_{min} - \ln\eta^*_{25})/(T_{min} - 25)\} \times 1,000 \quad (1)$$

$$TS2 = \{(\ln\eta^*_{75} - \ln\eta^*_{min})/(75 - T_{min})\} \times 1,000 \quad (2)$$

wherein $\eta^*_{25}$ and $\eta^*_{75}$ represent complex viscosities (Pa·s) at a measurement frequency of 1 Hz and a temperature of 25°C and 75°C, respectively, when the temperature of the acidic oil-in-water emulsified food is increased from 25°C to 75°C at a temperature increasing rate of 2.5°C/min, and $\eta^*_{min}$ represents a complex viscosity at a temperature ($T_{min}$) at which the complex viscosity is the lowest. In particular, the present invention provides an embodiment in which an egg white which is denatured at a pH of 2 or lower or 11 or higher, an egg white which is denatured by heating at a pH of 5 or lower and a temperature of 50 to 120°C, or an egg white which is denatured by heating at a pH of 9 or higher and a temperature of 60 to 120°C in advance before mixing with the edible oil and fat, the emulsifier, and the thickener is used as the denatured egg white.

Advantageous Effects of Invention

The acidic oil-in-water emulsified food of the present invention has a specific relationship between temperature and complex viscosity. Therefore, the acidic oil-in-water emulsified food has excellent storage stability under a severe storage condition such as a temporary frozen state and a high temperature state of about 40°C and can prevent the occurrence of a crack and oil separation during storage.

Brief Description of Drawings

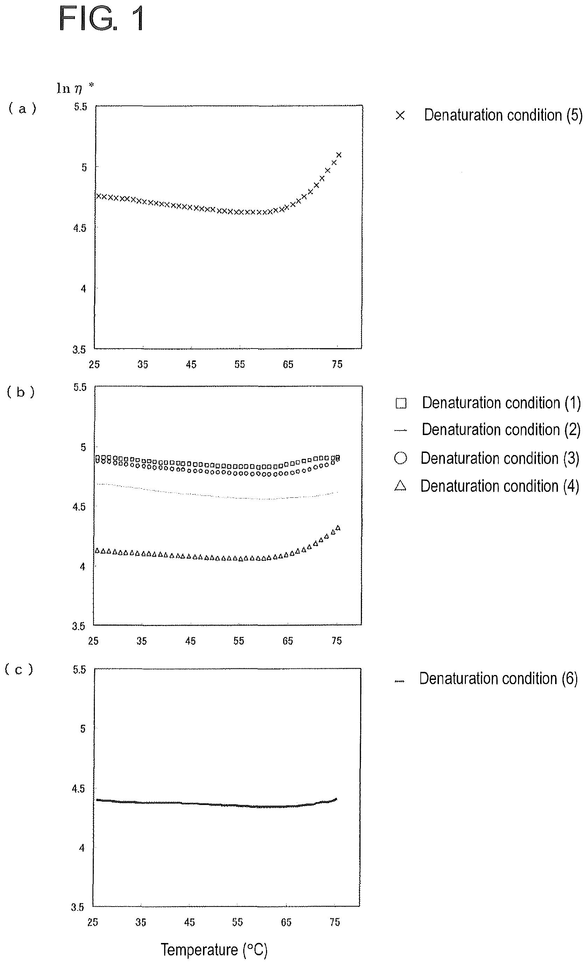

FIG. 1 contains graphs of a relationship between the temperature and the logarithm of complex viscosity $\eta^*$ of an acidic oil-in-water emulsified food.

Description of Embodiments

Hereinafter, the present invention will be described in detail with reference to the drawings. In the present invention, "part (s)" indicates "part(s) by mass" and "%" indicates "% by mass" unless otherwise indicated.

The acidic oil-in-water emulsified food of the present invention contains an edible oil and fat, a denatured egg white, an emulsifier, and a thickener, and is in an oil-in-water emulsified state, in which the edible oil and fat is substantially uniformly dispersed as oil droplets in an aqueous phase.

In the acidic oil-in-water emulsified food of the present invention, the content of the edible oil and fat contained is 5 to 75%, preferably 5 to 60%, and more preferably 10 to 40%. Since the edible oil and fat is substantially uniformly dispersed as oil droplets in an aqueous phase, a rich taste is achieved. When the content of the edible oil and fat contained is too small, an emulsified food product with a rich taste is unlikely to be produced. In contrast, when the content thereof is too large, oil separation is likely to occur during storage at a high temperature of about 40°C.

Examples of the edible oil and fat used may include refined vegetable oils such as rapeseed oil, corn oil, cotton seed oil, sunflower oil, olive oil, safflower oil, soybean oil, and palm oil, and oils and fats which are obtained by having been subjected to a chemical or enzymatic treatment, such as medium-chain fatty acid triglyceride (MCT) and diglyceride. These oils and fats may be used either alone or in combination of two or more kinds thereof.

The aqueous phase of the acidic oil-in-water emulsified food of the present invention contains an organic acid such as vinegar or citric acid or an acid such as citrus fruit juice including lemon juice. The pH of the aqueous phase is usually adjusted by the acid to an acidic pH of 4.6 or lower, and preferably 3.5 to 4.5.

As the emulsifier, an egg yolk such as a raw egg yolk, a sterilized egg yolk, and a lysed egg yolk, lecithins such as lecithin and lysolecithin, an emulsifiable starch such as an octenyl succinylated starch, a glycerine fatty acid ester, a polyglycerin fatty acid ester, a sucrose fatty acid ester, a sorbitan fatty acid ester, or the like can be used. Among them, an egg yolk, lecithin, and an emulsifiable starch are preferable since a crack prevention effect and an oil separation suppression effect during storage under refrigeration at about -15°C or at a high temperature of about 40°C are improved.

The content of the emulsifier contained is preferably 0.1 to 10% relative to the acidic oil-in-water emulsified food, more preferably 0.5 to 8%, and further preferably 2 to 6%. When the content of the emulsifier contained is too small, the crack prevention effect and the oil separation suppression effect during storage under refrigeration (about -15°C) or at a high temperature (about 40°C) are unlikely to be obtained. In contrast, when the content thereof is too large, a crack is likely to occur. This is not preferable. When a lysed egg yolk, a raw egg yolk, or the like is used as the emulsifier, it is preferable that the content thereof in terms of solid content fall within the above-described range.

In the present invention, the thickener is used to improve the crack prevention effect and the oil separation suppression effect during storage of the acidic oil-in-water emulsified food under refrigeration at about -15°C or at a high temperature of about 40°C.

As the thickener, starches including a starch such as a potato starch, a corn starch, a tapioca starch, a wheat starch, and a rice starch, a modified starch obtained by subjecting these starches to a treatment such as gelatinization and cross-linking treatments, and a starch treated with heat and humidity, a gum substance such as xanthane gum and tamarind, and pectine may be used either alone or in combination of two or more kinds thereof.

The content of the thickener contained in the acidic oil-in-water emulsified food depends on the content of the denatured egg white contained and the kind of the used thickener. The content of the thickener contained is preferably 0.05% or more, more preferably 0.1 to 15%, further preferably 0.1 to 5%, and particularly preferably 0.1 to 3% in view of easy achievement of the crack prevention effect and the oil separation suppression effect. When the content of the thickener contained is too large, particularly exceeds 15%, the texture of the acidic oil-in-water emulsified food may be deteriorated, and therefore this is not preferable.

The acidic oil-in-water emulsified food of the present invention contains 0.3 to 5% of a denatured egg white in terms of solid content, and has the following relationship between temperature and complex viscosity.

Specifically, the first change ratio of the logarithm of complex viscosity with respect to temperature (TS1) and the second change ratio of the logarithm of complex viscosity with respect to temperature (TS2), which are calculated from the following equations (1) and (2), respectively, are TS1 = -8 to -2, and TS2 = 0 to 15, respectively,

$$TS1 = \{(\ln\eta^{*}_{min} - \ln\eta^{*}_{25})/(T_{min} - 25)\} \times 1,000 \quad (1)$$

$$TS2 = \{(\ln\eta^{*}_{75} - \ln\eta^{*}_{min})/(75 - T_{min})\} \times 1,000 \quad (2)$$

wherein $\eta^{*}_{25}$ and $\eta^{*}_{75}$ represent complex viscosities (Pa·s) at a measurement frequency of 1 Hz and a temperature of 25°C and 75°C, respectively, when the temperature of the acidic oil-in-water emulsified food is increased from 25°C to 75°C at a temperature increasing rate of 2.5°C/min, and $\eta^{*}_{min}$ represents a complex viscosity at a temperature ($T_{min}$) at which the complex viscosity is the lowest.

The complex viscosity can be measured using a rheometer. Preferable examples of the rheometer used may include high-accuracy rheometers such as trade name "ARES-RFS," "AR-2000," and "AR-G2" (manufactured by TA Instruments Japan Inc.), "RS600" (manufactured by Thermo Fisher Scientific K.K.), and "MCR-501" and "MCR-301" (manufactured by Anton Paar GmbH).

In order to satisfy the relationships of the first change ratio of the logarithm of complex viscosity with respect to temperature TS1 and the second change ratio of the logarithm of complex viscosity with respect to temperature TS2 in the acidic oil-in-water emulsified food of the present invention, the degree of denaturation of an egg white may be variously adjusted.

FIG. 1 shows relationships between temperature and complex viscosity (temperature increasing rate: 2.5°C/min, measurement frequency: 1 Hz), which are used for calculation of the first change ratio of the logarithm of complex viscosity with respect to temperature (TS1) and the second change ratio of the logarithm of complex viscosity with respect to temperature (TS2) in various acidic oil-in-water emulsified foods having different denatured states of egg white. In FIG. 1, the horizontal axis represents temperature from 25°C to 75°C, and the vertical axis represents the logarithm of complex viscosity of various acidic oil-in-water emulsified foods.

The acidic oil-in-water emulsified food contains 30% of a refined vegetable oil (rapeseed oil), 6% of lysed egg yolk, 15% of vinegar (acidity: 4%) as an acid, 15% of egg white (solid content: 12%), and 0.5% of xanthan gum, as a model composition of the present invention. The denaturation conditions of an egg white are the following six conditions.

Egg White Denaturation Conditions

(1) Protein concentration: 10%, pH: 1.5 (not heated)
(2) Protein concentration: 6%, pH: 3, at 90°C for 20 minutes
(3) Protein concentration: 10%, pH: 12 (not heated)
(4) Protein concentration: 10%, pH: 9, at 90°C for 15 minutes
(5) Protein concentration: 10%, pH: 8, at 55°C for 10 minutes
(6) Protein concentration: 10%, pH: 8, at 90°C for 30 minutes

In the conditions (1) and (3) among these denaturation conditions, an egg white is not denatured by heating, but denatured by acid and alkali, respectively. In the condition (5), an egg white is hardly denatured. Further, the condition (5) corresponds to a commercially available sterilized egg obtained by having been subjected to a heat treatment at a protein concentration of 10%, a pH of 8 to 9, and 55 to 60°C for 3 to 10 minutes. The condition (6) means that the denaturation of an egg white proceeds like a coagulated egg white of hard-boiled egg, in which an egg white is aggregated and denatured. In an acidic oil-in-water emulsified food using a denatured egg white of (6), water is added to an egg white coagulated by heating so that the protein concentration is 6%, and the egg white is mashed and used.

As seen from FIG. 1, when the relationship between the temperature and the logarithm of complex viscosity of the acidic oil-in-water emulsified food is plotted on the graphs, there are three dynamic viscosity characteristics (a), (b), and (c) of the acidic oil-in-water emulsified food depending on the denatured state of the egg white.

(a) The complex viscosity gradually decreases between 25°C and about 60°C, and largely increases between about 60°C and 75°C with an increase in temperature (egg white denaturation condition (5)).
The dynamic viscosity characteristic is exhibited when an egg white is not denatured or the degree of denaturation is low.
(b) The complex viscosity gradually decreases between 25°C and about 60°C, and slightly increases or remains substantially constant between about 60°C and 75°C with an increase in temperature (egg white denaturation conditions (1) to (4)).
An egg white protein has denatured states of various structures depending on the protein concentration, pH, temperature, treatment time, and the like during denaturation. The dynamic viscosity characteristic (b) of the acidic oil-in-water emulsified food is not exhibited when an egg white is completely denatured and aggregated.
(c) The complex viscosity remains substantially constant between 25°C and 75°C (egg white denaturation condition (6)).
The dynamic viscosity characteristic is exhibited when an egg white is completely aggregated and denatured.

In various acidic oil-in-water emulsified foods which contains 5 to 75% of an edible oil and fat and has a viscosity (25°C) of 50 to 800 Pa·s, three different dynamic viscosity characteristics (a), (b), and (c) are found depending on the denatured state of an egg white without limitation to the model composition. The acidic oil-in-water emulsified food of the present invention has the dynamic viscosity characteristic (b) among the dynamic viscosity characteristics (a), (b), and (c). More specifically, the acidic oil-in-water emulsified food of the present invention has a characteristic which satisfies TS1 = {(ln$\eta^*_{min}$ - ln$\eta^*_{25}$) / ($T_{min}$ - 25)} × 1,000) = -8 to -2 and TS2 = {(ln$\eta^*_{75}$ - ln$\eta^*_{min}$) / (75 - $T_{min}$)} × 1,000) = 0 to 15 wherein $\eta^*_{25}$ and $\eta^*_{75}$ represent complex viscosities (Pa·s) at a temperature of 25°C and 75°C, respectively, and $\eta^*_{min}$ represents a complex viscosity at a temperature ($T_{min}$) at which the complex viscosity is the lowest.

In the dynamic viscosity characteristic (b), the change of the complex viscosity with respect to the temperature gradually decreases between 25°C and about 60°C at which the complex viscosity is the lowest, as with the dynamic viscosity characteristic (a), and TS1 is -8 to -2. In contrast, in the dynamic viscosity characteristic (c), the complex viscosity is substantially constant. Therefore, it is considered that an egg white exhibiting the dynamic viscosity characteristic (b) has a property in which the fluidity of the acidic oil-in-water emulsified food is increased by heating from 25°C to about 60°C, like a substantially undenatured egg white exhibiting the dynamic viscosity characteristic (a).

In the dynamic viscosity characteristic (c) in which an egg white is aggregated and bonded, the complex viscosity is substantially constant between 25°C and about 60°C at which the complex viscosity is the lowest, whereas in the dynamic viscosity characteristic (b), the complex viscosity gradually decreases as described above. Therefore, it is considered that in the denatured state of the egg white exhibiting the dynamic viscosity characteristic (b), egg white proteins are not strongly bonded and some bonds in the acidic oil-in-water emulsified food are dissociated by heating to 60°C. Accordingly, it is presumed that in an acidic oil-in-water emulsified food exhibiting the dynamic viscosity characteristic (b), the egg white proteins are moderately bonded with each other or with emulsion particles or the thickener, the bonds are dissociated by heating to 60°C, and the flowability of the acidic oil-in-water emulsified food increases. In other words, it is presumed that egg white proteins are moderately bonded with each other or with emulsion particles or the thickener at a temperature generally lower than 60°C, for example, of about 40°C.

In the dynamic viscosity characteristic (b), the complex viscosity is substantially constant at a temperature higher than 60°C, as with the dynamic viscosity characteristic (c), and TS2 is 0 to 15. On the other hand, in the dynamic viscosity characteristic (a), the complex viscosity significantly increases with an increase in temperature. Therefore, it is presumed that the egg white exhibiting the dynamic viscosity characteristic (b) has a property in which the storage stability of the acidic oil-in-water emulsified food is improved as with an aggregated and denatured egg white exhibiting the dynamic viscosity characteristic (c) since the dynamic viscosity in the acidic oil-in-water emulsified food is not increased at a temperature higher than 60°C and the stability of the egg white protein is high.

On the other hand, the egg white exhibiting the dynamic viscosity characteristic (a) is substantially undenatured, and denatured at a temperature higher than 60°C to promote aggregation. Therefore, it is presumed that the stability of the egg white protein is low and the storage stability of an acidic oil-in-water emulsified food is low.

As described above, the present inventors have found that among three dynamic viscosity characteristics (a), (b), and (c) of the acidic oil-in-water emulsified food classified by the denatured state of used egg white, the acidic oil-in-water emulsified food having the dynamic viscosity characteristic (b) has excellent storage stability at low temperature leading to a temporary frozen state at about -15°C or a high temperature of about 40°C, can prevent the occurrence of a crack and oil separation in the food during storage, additionally has excellent storage stability even during storage in a temporary frozen state, and can prevent the occurrence of a crack in the food after thawing. Therefore, the acidic oil-in-water emulsified food of the present invention has a function in which egg white proteins, or the egg white proteins are moderately bonded with each other or with emulsion particles or the thickener at a temperature generally lower than 60°C, for example, about 40°C, and a function in which the stability of egg white proteins is high at a temperature higher than 60°C, and satisfies TS1 = -8 to -2 and TS2 = 0 to 15.

In the present invention, the intent of restriction of TS1 = -8 to -2 is to exclude the acidic oil-in-water emulsified food exhibiting the dynamic viscosity characteristic (c) since denatured and aggregated egg white is contained. Further, the intent of restriction of TS2 = 0 to 15 is to exclude the acidic oil-in-water emulsified food exhibiting the dynamic viscosity characteristic (a) since an undenatured egg white or an egg white having low degree of degeneration is contained. In particular, since the acidic oil-in-water emulsified food of the present invention has excellent storage stability at high temperature, TS2 = 0 to 10 is preferable.

The reason for excellent crack prevention effect of the acidic oil-in-water emulsified food having the dynamic viscosity characteristic (b) is not necessarily obvious. However, it is considered that the long-term storage stability at low temperature or high temperature is achieved by an egg white in a state exhibiting the dynamic viscosity characteristic (b), which is almost or completely inactive in a protein aggregation action by heating and is moderately bonded to emulsion particles or the like.

On the other hand, the egg white exhibiting the dynamic viscosity characteristic (a) has low stability, and the egg white exhibiting the dynamic viscosity characteristic (c) has high stability but does not have a function in which the egg white is moderately bonded to emulsion particles or the like. Therefore, it is considered that the crack prevention effect of the acidic oil-in-water emulsified food is unlikely to be sufficiently obtained during thawing after refrigeration.

As shown in Examples, the relationship among the denatured state of an egg white, the dynamic viscosity characteristics (a), (b), and (c) of an acidic oil-in-water emulsified food containing an egg white, and the long-term storage stability at low temperature or high temperature is established in not only the acidic oil-in-water emulsified food having the model composition but also an acidic oil-in-water emulsified food which contains 5 to 75% of an edible oil and fat, an emulsifier, a thickener, and 0.3 to 5% of a denatured egg white in terms of solid content, and has a viscosity of 50 to 800 Pa·s.

In view of this, the denatured egg white used in the present invention satisfies a first change ratio of the logarithm of complex viscosity with respect to temperature (TS1), which is calculated from the following equation (1), of -8 to -2 and a second change ratio of the logarithm of complex viscosity with respect to temperature (TS2), which is calculated from the following equation (2), of 0 to 15,

$$TS1 = \{(\ln\eta^*_{min} - \ln\eta^*_{25})/(T_{min} - 25)\} \times 1,000 \quad (1)$$

$$TS2 = \{(\ln\eta^*_{75} - \ln\eta^*_{min})/(75 - T_{min})\} \times 1,000 \quad (2)$$

wherein, when the temperature of an acidic oil-in-water emulsified food which contains 0.3 to 5% of a denatured egg white in terms of solid content, 5 to 75% of an edible oil and fat, a lysed egg yolk, and a thickener, and has a viscosity (25°C) of 50 to 800 Pa·s is increased from 25°C to 75°C at a temperature increasing rate of 2.5°C/min and the complex viscosity is measured at a measurement frequency of 1 Hz, $\eta^*_{25}$ and $\eta^*_{75}$ represent complex viscosities (Pa·s) at a temperature of 25°C and 75°C, respectively, and $\eta^*_{min}$ represents a complex viscosity at a temperature ($T_{min}$) at which the complex viscosity is the lowest. More specifically, when the acidic oil-in-water emulsified food having the aforementioned model composition is prepared using a denatured egg white, and the complex viscosity is measured as described above, the denatured egg white satisfies TS1 = -8 to -2 and TS2 = 0 to 15.

When the content of the denatured egg white contained is less than 0.3% in terms of solid content, it is difficult that the acidic oil-in-water emulsified food has the dynamic viscosity characteristic (b). When the content of the egg white contained exceeds 5% in terms of solid content, the acidic oil-in-water emulsified food is unlikely to be emulsified. This is not preferable. It is preferable that the content of the denatured egg white contained be 1% or more in terms of solid content and 10% or more in terms of raw egg white since the crack prevention effect is likely to be obtained.

In the present invention, in order to convert an egg white into a denatured state in which an egg white protein is almost or completely inactive in a protein aggregation action by heating and the protein is moderately bonded to emulsion particles or the like, it is preferable that the egg white protein be denatured at a pH away from an isoelectric point. This is because the protein can be denatured without aggregation.

Specific examples of the denatured state of an egg white may include (i) a state in which the egg white is denatured at a pH of 2 or lower, (ii) a state in which the egg white is denatured at a pH of 11 or higher, (iii) a state in which the egg white is denatured by heating at a pH of 5 or lower and a temperature of 50 to 120°C for 5 to 50 minutes, preferably by heating at a pH of 4 or lower and a temperature of 80 to 100°C for 10 to 40 minutes, and (iv) a state in which the egg white is denatured by heating at a pH of 9 or higher and a temperature of 60 to 120°C for 5 to 50 minutes, preferably by heating at a pH of 10 or higher and a temperature of 80 to 100°C for 10 to 40 minutes, in advance before mixing the egg white with an edible oil and fat, an emulsifier, and a thickener. When the egg white is mixed with an edible oil and fat, an emulsifier, a thickener, and the like, and then denatured at the same pH and temperature as in each of (i) to (iv), the dynamic viscosity characteristic (b) cannot be imparted to the acidic oil-in-water emulsified food, and the crack prevention effect and the oil separation prevention effect cannot be sufficiently obtained.

The acidic oil-in-water emulsified food of the present invention has the same viscosity as in a mayonnaise or a mayonnaise-like food, and has a viscosity at 25°C of 50 to 800 Pa·s, and more preferably 70 to 500 Pa·s. Therefore, the crack prevention effect at low temperature or high temperature over a long term is further likely to be obtained. The viscosity of the whole acidic oil-in-water emulsified food is a value calculated from an indication displayed one minute after measurement of an acidic oil-in-water emulsified food having a product temperature of 25°C with a BH-type viscometer. The setting conditions of the BH-type viscometer are set as follows depending on the viscosity value. Specifically, when a viscosity is 500 Pa·s or lower, the measurement is performed using a No. 6 rotor at a rotation speed of 2 rpm, and when a viscosity exceeds 500 Pa·s, the measurement is performed using a T-bar spindle and a T-bar D at a rotation speed of 2 rpm and an increasing rate of 20 mm/min. The viscosity is adjusted according to the kind or the content of an oil and fat or a thickener contained.

In the acidic oil-in-water emulsified food of the present invention, various raw materials generally used for the acidic oil-in-water emulsified food within a range not impairing the effects of the present invention can be appropriately selected and mixed. Examples thereof may include saccharides such as a starch decomposition product, dextrin alcohol, oligosaccharide, and oligosaccharide alcohol, an acidulous material such as lactic acid, various seasonings such as sodium glutamate, salt, and sugar, extracts of animals and plants, condiments such as dry mustard and pepper, various proteins, and decomposition products thereof.

A method for producing the acidic oil-in-water emulsified food of the present invention may be performed in accordance with a conventional method for producing a mayonnaise. For example, an aqueous phase raw material containing an emulsifier, a thickener, a denatured egg white, and the like homogeneously, and an oil phase raw material containing an edible oil and fat are roughly emulsified with a mixer or the like, and then finely emulsified with a colloid mill or the like, and the mixture is placed in a tube container, a glass container, or the like.

Examples

Hereinafter, the present invention will be described specifically based on Examples.

Examples 1 to 12 and Comparative Examples 1 and 2

(1) Preparation of Denatured Egg White

Denatured egg whites were prepared as follows under denaturation conditions of Examples 1, 2, and 3, shown in Table 1.

An egg white and pure water were mixed to prepare an aqueous egg white solution having a protein concentration of 10%. To the solution, a hydrochloric acid solution was added while stirring, to adjust the pH to 1.5. Thus, a denatured egg white of Example 1 was obtained. In the same manner as described above, an aqueous sodium hydroxide solution was added to an aqueous egg white solution having a protein concentration of 10% to adjust the pH to 12. Thus, a denatured egg white of Example 3 was obtained. An aqueous egg white solution having a protein concentration of 6% was prepared. 1 kg of the aqueous egg white solution was placed in a 1-kg-volume nylon polyethylene bag. The bag was hermetically sealed, heated at 90°C for 20 minutes, and immediately cooled by cold water to obtain a denatured egg white of Example 2. Hereinafter, egg whites were obtained under denaturation conditions of Examples 4 to 12 and Comparative Examples 1 and 2 in accordance with these procedures. In Comparative Example 2, an aqueous egg white solution having a protein concentration of 10% was heated to coagulate the egg white, water was added to the coagulated egg white so that the protein concentration was 6%, and the egg white was mashed to obtain a denatured egg white.

(2) Production of Acidic Oil-In-Water Emulsified Food

A raw egg yolk was treated with phospholipase A2 to obtain a lysed egg yolk (solid content: 50%) having a lysis ratio of 30%. The lysed egg yolk, the denatured egg white prepared in (1), vinegar, xanthan gum, seasoning (salt, dry mustard, and sodium glutamate), and pure water were stirred uniformly with a mixer in a ratio shown in Table 1 to prepare an aqueous phase. To the aqueous phase, rapeseed oil was added and roughly emulsified. The resulting roughly emulsified product was finely emulsified with a colloid mill, and placed in a 300-mL tube and hermetically sealed to produce an acidic oil-in-water emulsified food of Example 1. Acidic oil-in-water emulsified foods of Examples 2 to 12 and Comparative Examples 1 and 2 were produced by changing the ratio of the acidic oil-in-water emulsified food into the ratio shown in Table 1.

(3) Evaluation

(3-1) Measurement of Dynamic Viscosity Characteristic

The dynamic viscosity characteristic of the acidic oil-in-water emulsified food of each of Examples and Comparative Examples was measured under the following measurement conditions, and a relationship between temperature and complex viscosity was determined.

<Measurement Conditions>

- Measurement device: Rheometer AR-G2 (manufactured by TA Instruments Japan Inc.)
- Geometry: $\phi$ 40 mm parallel plate, made of aluminum
- Gap: 1,400 $\mu$m
- Measurement mode: temperature variation measurement

(temperature ramp)

- Initial temperature: 25.0°C (equilibrated and measured 3 minutes after the initiation)
- Temperature increase setting: increased from 25.0°C to 75.0°C
- Temperature increasing rate: 2.5°C/min
- Dynamic strain (fixed): 0.01 (1%)
- Amplitude frequency (fixed): 6.283 rad/s (1 Hz)
- Sample amount: about 2 g
- Evaluation value: $\eta^*$ (Pa·s) : complex viscosity

In each of Examples and Comparative Examples, a value ($\eta^*_{min}$) which was the lowest complex viscosity $\eta^*$ and a temperature ($T_{min}$) at which the complex viscosity took the value were determined. Complex viscosities $\eta^*_{25}$ and $\eta^*_{75}$ (Pa·s) at a temperature of 25°C and 75°C, respectively, were determined. A first change ratio of the logarithm of complex viscosity with respect to temperature (Thermo-Sensitivity 1: TS1) and a second change ratio of the logarithm of complex viscosity with respect to temperature (Thermo-Sensitivity 1: TS2) were calculated from the following equations (1) and (2), respectively.

$$TS1 = \{(\ln\eta^*_{min} - \ln\eta^*_{25})/(T_{min} - 25)\} \times 1{,}000 \quad (1)$$

$$TS2 = \{(\ln\eta^*_{75} - \ln\eta^*_{min})/(75 - T_{min})\} \times 1{,}000 \quad (2)$$

The results are shown in Table 1.

(3-2) Viscosity

With respect to the acidic oil-in-water emulsified food of each of Examples and Comparative Examples, a viscosity was calculated from an indication displayed after two rotations using a BH-type viscometer and a No. 6 rotor under measurement conditions of a rotation speed of 2 rpm and a product temperature of 25°C. The results are shown in Table 1.

(3-3) Long-Term Storage Test

The acidic oil-in-water emulsified food of each of Examples and Comparative Examples was stored at 40°C for 1 week. The presence or absence of a crack and oil separation after the long-term storage was visually observed, and evaluated in accordance with the following criteria.

A: No crack or oil separation was observed.
B: A crack or oil separation was observed.

The results are shown in Table 1.

(3-4) Refrigeration·Thawing Test

The acidic oil-in-water emulsified food of each of Examples and Comparative Examples was stored at -15°C for 10 days, and returned to normal temperature. After that, the presence or absence of a crack and oil separation was visually observed, and evaluated in accordance with the following criteria.

A: No crack or oil separation was observed.
B: A crack or oil separation was observed.

The results are shown in Table 1.

Table 1

| No. | Ratio (%) | | | | | | | Egg white denaturation conditions | | | Viscosity (Pa·s) | Dynamic viscosity charasteristic | | Long-term storage test at 40°c for 1 week | Refrigeration thawing test at -15°C for 10 days |
|---|---|---|---|---|---|---|---|---|---|---|---|---|---|---|---|
| | Rapeseed oil | Emulsifier | Denatured egg white (solid content) | Vinegar | Thickener | Seasoning | Pure water | Protein concentration (%) | pH | Heating condition | | TS1 | TS2 | | |
| 1 | 30 | Lyzed egg yolk (solid content)3 | 1.8 | 15 | Xanthane gum 0.5 | 3 | Remainder | 10 | 1.5 | None | 230 | -2.2 | 2.1 | A | A |
| 2 | 30 | Lyzed egg yolk (solid content) 3 | 1.8 | 15 | Xanthane gum 0.5 | 3 | Remainder | 6 | 3 | at 90°C for 20 min. | 135 | -3.8 | 3.5 | A | A |
| 3 | 30 | Lyzed egg yolk (solid content) 3 | 1.8 | 15 | Xanthane gum 0.5 | 3 | Remainder | 10 | 12 | None | 263 | -3.1 | 9.5 | A | A |
| 4 | 30 | Lyzed egg yolk (solid content) 3 | 1.8 | 15 | Xanthane gum 0.5 | 3 | Remainder | 10 | 9 | at 90°C for 15 min. | 125 | 2.4 | 13 | A | A |
| 5 | 66 | Octenyl succinylated starch 2 Enzymatically treated egg yolk oil (egg yolk lysolecithin) 0.02 | 0.3 | 8 | Acetylated adipic add cross-linked starch 0.2 | 25 | Remainder | 10 | 11 | at 80°C for 40 min. | 265 | -6.4 | 125 | A | A |
| 6 | 10 | Raw egg yolk (solid content) 7 | 1 | 15 | Tamarind seed gum 0.3 Xanthane gum 1.7 | 3.5 | Remainder | 6 | 3 | at 90°C for 20 min. | 210 | -2.2 | 0 | A | A |

Example

(continued)

| No. | Ratio (%) | | | | | | | Egg white denaturation conditions | | | Viscosity (Pa·s) | Dynamic viscosity charasteristic | | Long-term storage test at 40°c for 1 week | Refrigeration thawing test at -15°C for 10 days |
| --- | --- | --- | --- | --- | --- | --- | --- | --- | --- | --- | --- | --- | --- | --- | --- |
| | Rapeseed oil | Emulsifier | Denatured egg white (solid content) | Vinegar | Thickener | Seasoning | Pure water | Protein concentration (%) | pH | Heating condition | | TS1 | TS2 | | |
| 7 | 10 | Raw egg yolk (solid content) 7 | 0.3 | 15 | Tamarind seed gum 0.3 Xanthane gum 1.7 | 3.5 | Remainder | 6 | 3 | at 90°C for 20 min. | 170 | -2 | 1.5 | A | A |
| 8 | 66 | Lyzed egg yolk (solid content) 6 | 0.3 | 8 | Xanthane gum 0.1 | 25 | Remainder | 10 | 11 | at 80°C for 40 min. | 85 | -6.6 | 11.2 | A | A |
| 9 | 66 | Lyzed egg yolk (solid content) 6 | 0.3 | 8 | Xanthane gum 0.1 | 2.5 | Remainder | 3 | 11 | at 90°C for 20 min. | 70 | -7.8 | 11.7 | A | A |
| 10 | 6 | Lyzed egg yolk (solid content) 4 | 1 | 15 | Xanthane gum 2 | 5 | Remainder | 6 | 11 | at 90°C for 20 min. | 170 | -2.1 | 0 | A | A |
| 11 | 40 | Lyzed egg yolk (solid content) 10 | 0.3 | 15 | Xanthane gum 1 | 3 | Remainder | 6 | 1 | None | 230 | -2.1 | 0.4 | A | A |
| 12 | 40 | Lyzed egg yolk (solid content) 10 | 0.3 | 15 | Xanthane gum 1 | 3 | Remainder | 6 | 12 | None | 203 | -2.9 | 5.9 | A | A |

| | No. | Ratio (%) | | | | | | | Egg white denaturation conditions | | | Viscosity (Pa·s) | Dynamic viscosity charasteristic | | Long-term storage test at 40°c for 1 week | Refrigeration thawing test at -15°C for 10 days |
| | | Rapeseed oil | Emulsifier | Denatured egg white (solid consent) | Vinegar | Thickener | Seasoning | Pure water | Protein concentration (%) | pH | Heating condition | | TS1 | TS2 | | |
|---|---|---|---|---|---|---|---|---|---|---|---|---|---|---|---|---|
| Comparative Examples | 1 | 30 | Lyzed egg yolk (solid content) 3 | 1.8 | 15 | Xanthane gum 0.5 | 3 | Remainder | 10 | 8 | at 55°C for 10 min. | 155 | -4.4 | 26.5 | B (Crack) | A |
| | 2 | 30 | Lyzed egg yolk (solid content) 3 | 1.8 | 15 | Xanthane gum 0.5 | 3 | Remainder | 10 | 8 | at 90°C for 30 min. | 120 | -1.8 | 4.5 | A | B (Crack) |

EP 2 774 493 B1

As seen from the results of Table 1, in the acidic oil-in-water emulsified foods of Comparative Examples, in which the first change ratio of the logarithm of complex viscosity with respect to temperature TS1 and the second change ratio of the logarithm of complex viscosity with respect to temperature TS2 do not satisfy the requirements of the present invention, a crack occurs after the long-term storage. In contrast, in the acidic oil-in-water emulsified foods of Examples, a crack and oil separation do not occur even after the long-term storage, and a crack and oil separation do not occur even during thawing after refrigeration. Therefore, it is clear that the acidic oil-in-water emulsified foods of Examples have a long-term storageability and a transportability in logistics.

Comparative Examples 3 and 4

An acidic oil-in-water emulsified food of Comparative Example 3 was produced from 6% of egg yolk treated with phospholipase A2 (solid content: 50%), 15% of raw egg white (solids content: 12%), 15% of vinegar, 30% of purified water, 2.5% of salt, 0.5% of xanthan gum, 0.5% of dry mustard, and 0.5% of sodium glutamate in the same manner as in Example 1 of Japanese Patent Application Laid-Open No. 2001-252041. An acidic oil-in-water emulsified food of Comparative Example 4 was produced in the same manner as in Comparative Example 3 except that xanthan gum was not added.
The acidic oil-in-water emulsified foods were stored at 40°C for 1 week. A crack was confirmed.

Comparative Example 5

An acidic oil-in-water emulsified food of Comparative Example 5 was produced from 8% of raw egg yolk (solid content: 50%), 6% of egg white prepared under the same condition as in the egg white in Example 4 (solids content: 12%), 15% of vinegar, 30% of purified water, 2.5% of salt, 0.5% of dry mustard, and 0.5% of sodium glutamate. The acidic oil-in-water emulsified food was stored at 40°C for 1 week. Oil separation was confirmed.

**Claims**

1. An acidic oil-in-water emulsified food comprising 5 to 75% by mass of an edible oil and fat, 0.3 to 5% by mass of a denatured egg white in terms of solid content, an emulsifier, and a thickener, the acidic oil-in-water emulsified food having a viscosity (25°C) of 50 to 800 Pa·s, wherein a first change ratio of the logarithm of complex viscosity with respect to temperature (TS1) and a second change ratio of the logarithm of complex viscosity with respect to temperature (TS2), which are calculated from the following equations (1) and (2), respectively, satisfy TS1 = -8 to -2, and
   TS2 = 0 to 15, respectively,

$$TS1 = \{(\ln\eta^*_{min} - \ln\eta^*_{25})/(T_{min} - 25)\} \times 1{,}000 \quad (1)$$

$$TS2 = \{(\ln\eta^*_{75} - \ln\eta^*_{min})/(75 - T_{min})\} \times 1{,}000 \quad (2)$$

   wherein $\eta^*_{25}$ and $\eta^*_{75}$ represent complex viscosities (Pa·s) at a measurement frequency of 1 Hz and a temperature of 25°C and 75°C, respectively, when the temperature of the acidic oil-in-water emulsified food is increased from 25°C to 75°C at a temperature increasing rate of 2.5°C/min, and $\eta^*_{min}$ represents a complex viscosity at a temperature ($T_{min}$) at which the complex viscosity is the lowest.

2. The acidic oil-in-water emulsified food according to claim 1, wherein the denatured egg white is an egg white which is denatured in advance at a pH of 2 or lower before mixing with the edible oil and fat, the emulsifier, and the thickener.

3. The acidic oil-in-water emulsified food according to claim 1, wherein the denatured egg white is an egg white which is denatured in advance at a pH of 11 or higher before mixing with the edible oil and fat, the emulsifier, and the thickener.

4. The acidic oil-in-water emulsified food according to claim 1, wherein the denatured egg white is an egg white which is denatured in advance by heating at a pH of 5 or lower and a temperature of 50 to 120°C for 5 to 50 minutes before mixing with the edible oil and fat, the emulsifier, and the thickener.

**5.** The acidic oil-in-water emulsified food according to claim 1, wherein the denatured egg white is an egg white which is denatured in advance by heating at a pH of 9 or higher and a temperature of 60 to 120°C for 5 to 50 minutes before mixing with the edible oil and fat, the emulsifier, and the thickener.

**6.** The acidic oil-in-water emulsified food according to any one of claims 1 to 5, wherein the emulsifier is contained in an amount of 0.1 to 10% by mass.


**Patentansprüche**

**1.** Emulgiertes saures Öl-in-Wasser-Lebensmittel, umfassend 5 bis 75 Massen-% Speiseöl und Speisefett, 0,3 bis 5 Massen-% denaturiertes Eiweiß, bezogen auf den Feststoffgehalt, einen Emulgator und ein Verdickungsmittel, wobei das emulgierte saure Öl-in-Wasser-Lebensmittel eine Viskosität (25 °C) von 50 bis 800 Pa·s hat, wobei eine erste Temperaturänderungsrate des Logarithmus der komplexen Viskosität (TS1) und eine zweite Temperaturänderungsrate des Logarithmus der komplexen Viskosität (TS2), die aus den folgenden Gleichungen (1) bzw. (2) berechnet werden,

$$TS1 = \{(\ln\eta^*_{min} - \ln\eta^*_{25})/(T_{min} - 25)\} \times 1.000 \quad (1)$$

$$TS2 = \{(\ln\eta^*_{75} - \ln\eta^*_{min})/(75 - T_{min})\} \times 1.000 \quad (2)$$

TS1 = -8 bis -2 bzw.
TS2 = 0 bis 15

genügen, wobei $\eta^*_{25}$ und $\eta^*_{75}$ komplexe Viskositäten (Pa·s) bei einer Messfrequenz von 1 Hz und einer Temperatur von 25 °C bzw. 75 °C sind, wenn die Temperatur des emulgierten sauren Öl-in-Wasser-Lebensmittels mit einer Geschwindigkeit von 2,5 °C/min für die Temperaturerhöhung von 25 °C auf 75 °C erhöht wird, und $\eta^*_{min}$ die komplexe Viskosität bei einer Temperatur ($T_{min}$) ist, bei der die komplexe Viskosität am geringsten ist.

**2.** Emulgiertes saures Öl-in-Wasser-Lebensmittel nach Anspruch 1, wobei das denaturierte Eiweiß ein Eiweiß ist, das vor dem Mischen mit dem Speiseöl und Speisefett, dem Emulgator und dem Verdickungsmittel bereits bei einem pH von 2 oder niedriger denaturiert wurde.

**3.** Emulgiertes saures Öl-in-Wasser-Lebensmittel nach Anspruch 1, wobei das denaturierte Eiweiß ein Eiweiß ist, das vor dem Mischen mit dem Speiseöl und Speisefett, dem Emulgator und dem Verdickungsmittel bereits bei einem pH von 11 oder höher denaturiert wurde.

**4.** Emulgiertes saures Öl-in-Wasser-Lebensmittel nach Anspruch 1, wobei das denaturierte Eiweiß ein Eiweiß ist, das vor dem Mischen mit dem Speiseöl und Speisefett, dem Emulgator und dem Verdickungsmittel bereits durch 5 bis 50 Minuten Erhitzen bei einem pH von 5 oder niedriger und einer Temperatur von 50 bis 120 °C denaturiert wurde.

**5.** Emulgiertes saures Öl-in-Wasser-Lebensmittel nach Anspruch 1, wobei das denaturierte Eiweiß ein Eiweiß ist, das vor dem Mischen mit dem Speiseöl und Speisefett, dem Emulgator und dem Verdickungsmittel bereits durch 5 bis 50 Minuten Erhitzen bei einem pH von 9 oder höher und einer Temperatur von 60 bis 120 °C denaturiert wurde.

**6.** Emulgiertes saures Öl-in-Wasser-Lebensmittel nach einem der Ansprüche 1 bis 5, wobei der Emulgator in einer Menge von 0,1 bis 10 Massen-% enthalten ist.


**Revendications**

**1.** Aliment émulsionné huile-dans-eau acide comprenant de 5 à 75 % en masse d'une huile et graisse comestible, de 0,3 à 5 % en masse d'un blanc d'oeuf dénaturé en termes de teneur solide, un émulsionnant, et un épaississant, l'aliment émulsionné huile-dans-eau acide ayant une viscosité (25°C) de 50 à 800 Pa.s, dans lequel un premier rapport de modification du logarithme de viscosité complexe par rapport à la température (TS1) et un second rapport de modification du logarithme de viscosité complexe par rapport à la température (TS2), qui sont calculés à partir des équations (1) et (2) suivantes, respectivement, satisfont TS1 = -8 à -2, et TS2 = 0 à 15, respectivement,

$$TS1 = \{ (ln\eta^*_{min} - ln\eta^*_{25}) / (T_{min} - 25) \} \times 1{,}000 \qquad (1)$$

$$TS2 = \{ (ln\eta^*_{75} - ln\eta^*_{min}) / (75 - T_{min}) \} \times 1{,}000 \qquad (2)$$

où $\eta^*_{25}$ et $\eta^*_{75}$ représentent les viscosités complexes (Pa.s) à une fréquence de mesure de 1 Hz et à une température de 25°C et 75°C, respectivement, lorsque la température de l'aliment émulsionne huile-dans-eau acide est augmentée de 25°C à 75°C à une vitesse d'élévation de la température de 2,5°C/min, et $\eta^*_{min}$ représente une viscosité complexe à une température ($T_{min}$) à laquelle la viscosité complexe est la plus faible.

2. Aliment émulsionné huile-dans-eau acide selon la revendication 1, dans lequel le blanc d'oeuf dénaturé est un blanc d'oeuf qui est dénaturé à l'avance à un pH de 2 ou inférieur avant mélange avec l'huile et graisse comestible, l'émulsionnant, et l'épaississant.

3. Aliment émulsionné huile-dans-eau acide selon la revendication 1, dans lequel le blanc d'oeuf dénaturé est un blanc d'oeuf qui est dénaturé à l'avance à un pH de 11 ou supérieur avant mélange avec l'huile et graisse comestible, l'émulsionnant et l'épaississant.

4. Aliment émulsionné huile-dans-eau acide selon la revendication 1, dans lequel le blanc d'oeuf dénaturé est un blanc d'oeuf qui est dénaturé à l'avance en chauffant à un pH de 5 ou inférieur et à une température de 50 à 120°C pendant de 5 à 50 minutes avant mélange avec l'huile et graisse comestible, l'émulsionnant, et l'épaississant.

5. Aliment émulsionné huile-dans-eau acide selon la revendication 1, dans lequel le blanc d'oeuf dénaturé est un blanc d'oeuf qui est dénaturé à l'avance en chauffant à un pH de 9 ou supérieur et à une température de 60 à 120°C pendant de 5 à 50 minutes avant mélange avec l'huile et graisse comestible, l'émulsionnant, et l'épaississant.

6. Aliment émulsionné huile-dans-eau acide selon l'une quelconque des revendications 1 à 5, dans lequel l'émulsionnant est contenu dans une quantité de 0,1 à 10 % en masse.

# FIG. 1

( a )

ln η *

× Denaturation condition (5)

( b )

□ Denaturation condition (1)
— Denaturation condition (2)
○ Denaturation condition (3)
△ Denaturation condition (4)

( c )

⋯ Denaturation condition (6)

Temperature (°C)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001252041 A